(19) Europäisches Patentamt / European Patent Office / Office européen des brevets

(11) **EP 4 764 603 A1**

(12) **EUROPÄISCHE PATENTANMELDUNG**

(43) Veröffentlichungstag:
24.06.2026  Patentblatt 2026/26

(21) Anmeldenummer: 25186893.1

(22) Anmeldetag: 02.07.2025

(51) Internationale Patentklassifikation (IPC):
**G01S 7/52** (2006.01)     **G01S 15/89** (2006.01)
**G01S 15/931** (2020.01)

(52) Gemeinsame Patentklassifikation (CPC):
**G01S 7/52004; G01S 7/521; G01S 15/931**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität:  19.12.2024  DE 102024212194

(71) Anmelder: **Robert Bosch GmbH**
**70442 Stuttgart (DE)**

(72) Erfinder:
• **Storck, Heiner**
  **70825 Korntal-Muenchingen (DE)**
• **Gerlach, Andre**
  **71229 Leonberg-Hoefingen (DE)**
• **Schoeneweiss, Robert**
  **70197 Stuttgart (DE)**
• **Liebler, Marko**
  **75015 Bretten (DE)**

(54) **COMPUTERIMPLEMENTIERTES VERFAHREN ZUR INITIALEN BESTIMMUNG EINER KOMPENSATION UNERWÜNSCHTER MECHANISCHER SCHWINGUNGEN IN EINEM ULTRASCHALL-ARRAYSENSOR, COMPUTERIMPLEMENTIERTES VERFAHREN ZUR REDUKTION UNERWÜNSCHTER MECHANISCHER SCHWINGUNGEN IN EINEM ULTRASCHALL-ARRAYSENSOR IM BETRIEB EINES FAHRZEUGS, COMPUTERPROGRAMM, STEUERGERÄT ODER ZENTRALE RECHENEINHEIT SOWIE FAHRZEUG**

(57)     Computerimplementiertes Verfahren zur Reduktion unerwünschter mechanischer Schwingungen in einem Ultraschall-Arraysensor im Betrieb eines Fahrzeugs, welcher mindestens zwei Ultraschallwandlerelemente (110, 110a, 110b) aufweist, wobei das Verfahren folgende Schritte umfasst: Aussendung (330) eines Ultraschallsignals mittels eines oder mehrerer Ultraschallwandlerelemente (110) des Ultraschall-Arraysensors (100) basierend auf wenigstens einem elektrischen Messsignal; und Empfang (340) des an einem Objekt in der Umgebung reflektierten Ultraschallsignals mittels des ersten und/oder eines zweiten Ultraschallwandlerelementes (110, 110a, 110b); wobei folgende Schritte durchgeführt werden: Ermittlung (320) des Messsignals und/oder Erzeugung (350) eines auf dem empfangenen reflektierten Ultraschallsignal basierenden Ausgabesignals jeweils in Abhängigkeit einer initialen Kompensationsmatrix und/oder in Abhängigkeit einer aktuellen Kompensationsmatrix.

**Fig. 1**

EP 4 764 603 A1

## Beschreibung

Die vorliegende Erfindung betrifft ein computerimplementiertes Verfahren zur initialen Bestimmung einer Kompensation unerwünschter mechanischer Schwingungen in einem Ultraschall-Arraysensor. Die Erfindung betrifft außerdem ein computerimplementiertes Verfahren zur Reduktion unerwünschter mechanischer Schwingungen in einem Ultraschall-Arraysensor im Betrieb eines Fahrzeugs. Die Erfindung betrifft des Weiteren ein Computerprogramm, umfassend Befehle, die bei der Ausführung des Programms durch einen Computer diesen veranlassen, die Schritte des erfindungsgemäßen Verfahrens zur Reduktion unerwünschter mechanischer Schwingungen in einem Ultraschall-Arraysensor im Betrieb eines Fahrzeugs auszuführen. Die Erfindung betrifft des Weiteren ein Steuergerät oder eine zentrale Recheneinheit, umfassend mindestens eine Recheneinheit, die so konfiguriert ist, dass sie die Schritte des erfindungsgemäßen Verfahrens zur Reduktion unerwünschter mechanischer Schwingungen in einem Ultraschall-Arraysensor im Betrieb eines Fahrzeugs ausführt. Die Erfindung betrifft des Weiteren ein Fahrzeug, umfassend das erfindungsgemäße Steuergerät oder die erfindungsgemäße zentrale Recheneinheit.

Stand der Technik

Ein Ultraschallsensor eines Fahrzeugs zur Erfassung der Umgebung des Fahrzeugs umfasst häufig als (elektroakustisches) Wandlerelement beziehungsweise Schallwandlerelement ein piezoelektrisches Element als Ultraschallwandlerelement, insbesondere ein piezokeramisches Element, welches an einer Innenseite einer Membran angeordnet ist. Im Sendebetrieb wird durch ein erzeugtes elektrisches Spannungssignal beziehungsweise ein erzeugtes elektrisches Anregungssignal an elektrischen Kontakten des Schallwandlerelements dieses zu mechanischen Schwingungen angeregt, wodurch ein Ultraschallsignal erzeugt beziehungsweise ausgesendet wird. Mit anderen Worten ist der Ultraschallwandler dazu eingerichtet, Ultraschallsignale in Abhängigkeit eines erzeugten elektrischen Anregungssignals in die Umgebung des Fahrzeugs auszusenden. Im Empfangsbetrieb beziehungsweise Empfangsmodus trifft ein rückgestreutes beziehungsweise ein an einem Hindernis oder Objekt in der Umgebung des Fahrzeugs reflektiertes Ultraschallsignal auf die Membran und versetzt diese in eine mechanische Schwingung, die mit Hilfe des piezokeramischen Elementes in eine elektrische Spannung gewandelt und erfasst wird. Die Laufzeit des an dem Objekt reflektierten Ultraschallsignals repräsentiert den Abstand des Objektes zum Ultraschallsensor des Fahrzeugs. Neben dem piezoelektrischen Wandlerprinzip betrifft die vorgestellte Erfindung auch Ultraschallsensoren nach anderen Wandlerprinzipien, beispielsweise elektrostatische Wandler, Elektretwandler oder Piezoelektretwandler oder mikromechanische Wandlerelemente. Diese Aufzählung ist nicht vollumfänglich.

Im Stand der Technik sind Ultraschallsensorvorrichtungen beziehungsweise Ultraschallsensoren als Arraysensoren auch für Fahrzeuge bekannt. Bei Ultraschall-Arraysensoren umfasst ein Sensor mehrere (elektroakustische) Wandlerelemente beziehungsweise Ultraschallwandlerelemente, die insbesondere zeitsynchron, d.h. auch phasensynchron, den Schall aussenden oder empfangen können (Phased-Array). Diese Wandlerelemente beziehungsweise Ultraschallwandlerelemente sind dazu typischerweise an verschiedenen geometrischen Positionen an der schallabstrahlenden bzw. schallempfangenden Außenfläche beziehungsweise an jeweils einer Membran des Ultraschall-Arraysensors angeordnet. Die zugeordnete Theorie der Array-Signalverarbeitung fordert für diese Anordnung vorzugsweise einen Abstand kleiner als die halbe Wellenlänge des Luftschalls für die Anordnung von jeweils zwei benachbarten Wandlerelementen beziehungsweise deren jeweils zugeordnete Membran. Dies bedeutet, dass die einzelnen Wandlerelemente geometrisch sehr eng benachbart angeordnet sind. Damit die Arraysensoren beim Beamforming im Senden oder Empfangen ihre richtungsabhängigen Eigenschaften ausbilden können, müssen die einzelnen Schallwandlerelemente unabhängig voneinander arbeiten. Dies bedeutet, dass im Sendefall jedes einzelne Wandlerelement im Idealfall eine mechanische Schwingung erzeugt, die der vorgegebenen elektrischen Anregung ohne Einfluss der Schwingungen und/oder elektrischen Signale der Nachbarelemente folgt. Im Empfangsfall erfassen beziehungsweise sensieren die einzelnen Wandlerelemente beziehungsweise Ultraschallwandlerelemente des Ultraschall-Array-Sensors das eintreffende beziehungsweise reflektierte Ultraschallsignal idealerweise ohne einen Einfluss einer Vibration der benachbarten Ultraschallwandlerelemente. Im realen Aufbau des Ultraschall-Array-Sensors tritt allerdings der unerwünschte Effekt des Übersprechens auf (engl. Crosstalk). Er beschreibt die Eigenschaft, dass die einzelnen Wandlerelemente nicht unabhängig voneinander senden und empfangen können, da die erzeugten Vibrationen und/oder elektrischen Signale zur Ansteuerung und/oder bei der Erfassung teilweise auf benachbarte Wandlerelemente übertragen werden. Diese gegenseitige Beeinflussung führt zu einer unerwünschten Veränderung der Richt- und Messcharakteristik und damit zu einer Verschlechterung der Sensorfunktion. Übersprechen ist technisch nicht vollständig zu vermeiden und führt zu einer Verschlechterung der theoretisch möglichen Sensorfunktion, beispielsweise der minimalen Messfähigkeit im Nahbereich beziehungsweise der nächstliegenden voneinander unterscheidbaren Abstände und/oder der maximalen Reichweite beziehungsweise der maximal voneinander unterscheidbaren Abstände sowie der auflösbaren Abstände beziehungsweise der resultierenden Toleranzen für basierend auf einem empfangenen Ultraschallsignal ermittelte Abstände zwischen einem Objekt und dem Ultraschall-Arraysensor. Bei der Entwicklung eines Arraysensors ist es folglich ein wichtiges Ziel, den Crosstalk beziehungsweise das unerwünschte Übersprechen von mechanischen Vibrationen und/oder elektrischen Signalen zwischen unterschiedlichen Ultraschallwandlerelementen des Ultraschall-Arraysensors möglichst gering zu halten. Üblicherweise wird versucht, durch passive, konstruktive Maßnahmen im Sensordesign, beispielsweise durch das Einbringen von mechanischen Entkopplungs- oder Dämpfungselementen und/oder einer Abschirmung elektrischer Leitungen, das Übersprechen so weit wie möglich zu minimieren. Dies gelingt jedoch nur bis zu einem gewissen Grad und die Wirksamkeit der einzelnen Maßnahmen kann von den Betriebs- oder Umgebungsbedingungen des Sensors, wie beispielsweise Temperatureinfluss oder Alterung von Materialien, abhängen.

Die Schrift DE 10 2022 206 262 A1 offenbart einen Ultraschall-Array-Sensor mit wenigstens zwei Ultraschallmembranelementen zum Aussenden und Empfangen von Ultraschallsignalen

Das Dokument DE 10 2015 202 396 A1 offenbart einen Ultraschallarray.

Die Schrift DE 10 2021 212 355 A1 offenbart ein ultraschallbasiertes Sensorsystem mit veränderbarem Erfassungsbereich.

Die Aufgabe der vorliegenden Erfindung ist es, einen Ultraschall-Arraysensor zu verbessern.

Offenbarung der Erfindung

Die vorstehende Aufgabe wird erfindungsgemäß entsprechend der unabhängigen Ansprüche 1, 4 und 11 bis 13 gelöst.

Die Erfindung betrifft ein computerimplementiertes Verfahren zur initialen Bestimmung einer Kompensation unerwünschter mechanischer Schwingungen in einem Ultraschall-Arraysensor. Der Ultraschall-Arraysensor umfasst mindestens zwei Ultraschallwandlerelemente, welche jeweils insbesondere einen Piezoaktor umfassten. Es ist vorteilhafterweise vorgesehen, dass ein gemeinsames plattenförmiges piezoelektrisches Element alle Ultraschallwandlerelemente aufweist, wobei vorzugsweise das gemeinsame plattenförmige piezoelektrische Element auf einer Seite für alle Ultraschallwandlerelemente eine gemeinsame Masseelektrode umfasst und das gemeinsame plattenförmige piezoelektrische Element für jedes der mindestens zwei Ultraschallwandlerelemente auf einer der Masseelektrode gegenüberliegenden Seite jeweils eine Elektrode aufweist, so dass für jedes der Ultraschallwandlerelemente separat ein elektrisches Signal, beispielsweise eine Spannung, für die Aussendung eines Ultraschallsignals angelegt beziehungsweise aufgeprägt und/oder für den Empfang eines reflektierten Ultraschallsignals erfasst werden kann. Das erfindungsgemäße Verfahren umfasst in zeitlicher Abfolge nacheinander die Erzeugung einer mechanischen Schwingung an jedem der Ultraschallwandlerelemente des Ultraschall-Arraysensors, insbesondere durch Anregung beziehungsweise Anlegung eines initialen Übersprechtestanregungssignals, beispielsweise einer initialen Übersprechtestanregungsspannung. Mit anderen Worten werden die Ultraschallwandlerelemente des Ultraschall-Arraysensors vorteilhafterweise zeitlich nacheinander jeweils zur Aussendung eines Ultraschallsignals angesteuert, insbesondere basierend auf einer initialen Übersprechtestanregungsspannung. Zu dieser Ansteuerung wird das Übersprechtestanregungssignal, beispielsweise die Übersprechtestanregungsspannung, vorteilhafterweise elektrisch als Strom- und/oder Spannungssignal erzeugt und beispielsweise von einer Recheneinheit beziehungsweise von einem ASIC des Ultraschall-Arraysensors an elektrische Kontakte des ersten Ultraschallwandlerelementes angelegt. Alternativ kann die mechanische Schwingung auch mittels eines Vibrationsgenerators außerhalb des Ultraschall-Arraysensors als Schallwelle beziehungsweise Schallsignal und/oder als mechanische Vibration erzeugt und dem Ultraschall-Arraysensor zugefügt werden. Die während und/oder nach der Erzeugung der mechanischen Schwingung an dem jeweiligen Ultraschallwandlerelement resultierende mechanische Verschiebung und/oder das elektrische Signal an jedem der Ultraschallwandlerelemente wird erfasst. Mit anderen Worten werden vorteilhafterweise während und/oder nach der Ansteuerung eines jeweiligen Ultraschallwandlerelementes beziehungsweise während und/oder nach der Aussendung eines Ultraschallsignals mittels des angesteuerten Ultraschallwandlerelementes die unerwünscht übertragenen mechanischen Schwingungen der anderen und desselben Ultraschallwandlerelementes sowie die unerwünscht übertragenen elektrischen Signale an jedem der Ultraschallwandlerelemente beziehungsweise vorzugsweise der gesamte Crosstalk erfasst. Vorzugsweise wird also mit anderen Worten eine mechanische Verschiebung jedes nicht sendenden Ultraschallwandlerelementes und/oder ein elektrisches Signal jedes nicht sendenden Ultraschallwandlerelementes sowie die mechanische Verschiebung des sendenden Ultraschallwandlerelementes und/oder ein elektrisches Signal des sendenden Ultraschallwandlerelementes nach der erzeugten mechanischen Schwingung am sendenden beziehungsweise angesteuerten Ultraschallwandlerelement erfasst. Durch die Erfassung der mechanischen Verschiebung des sendenden Ultraschallwandlerelementes und/oder des elektrischen Signals des sendenden Ultraschallwandlerelementes nach der erzeugten mechanischen Schwingung wird beispielsweise das Nachschwingen und/oder der (reflektierte beziehungsweise wiederkehrende) Crosstalk beziehungsweise das Übersprechen von den mechanischen Verschiebungen der nicht sendenden Ultraschallwandlerelemente erfasst. Die jeweilige Erfassung der während und/oder nach der Erzeugung der mechanischen Schwingung an dem jeweiligen Ultraschallwandlerelement resultierenden mechanischen Verschiebung und/oder das elektrische Signal an jedem der Ultraschallwandlerelemente erfolgt vorteilhafterweise mittels eines ASIC des Ultraschall-Arraysensors und/oder einer externen Recheneinheit und/oder mittels eines Laserstrahls eines außerhalb des Ultraschall-Arraysensors angeordneten Lasers beziehungsweise mittels eines Laser-Doppler-Vibrometers. Die Erzeugung der, den Crosstalk verursachenden mechanischen Schwingung wird vorteilhafterweise nacheinander an jedem der Ultraschallwandlerelemente durchgeführt und es werden jeweils während und/oder nach der erzeugten mechanischen Schwingung die resultierenden mechanischen Verschiebungen und/oder die elektrischen Signale an jedem der Ultraschallwandlerelemente erfasst. Anschließend wird vorteilhafterweise eine initiale Übertragungsmatrix des Ultraschall-Arraysensors in Abhängigkeit aller erfassten mechanischen Verschiebungen und/oder in Abhängigkeit aller erfassten elektrischen Signale der Ultraschallwandlerelemente ermittelt beziehungsweise bestimmt. Die bestimmte initiale Übertragungsmatrix repräsentiert insbesondere die Übertragung unerwünschter mechanischer Schwingungen zwischen den Ultraschallwandlerelementen des Ultraschall-Arraysensors, insbesondere bezüglich des Nachschwingens des jeweils sendenden beziehungsweise angesteuerten Ultraschallwandlerelements. Anschließend wird eine initiale Kompensationsmatrix des Ultraschall-Arraysensors als Inverse oder Pseudoinverse der bestimmten initialen Übertragungsmatrix ermittelt. Mit anderen Worten wird die initiale Kompensationsmatrix in Abhängigkeit aller erfassten mechanischen Verschiebungen und/oder in Abhängigkeit aller erfassten elektrischen Signale der Ultraschallwandlerelemente ermittelt. Mit wieder anderen Worten wird die initiale Kompensationsmatrix des Ultraschall-Arraysensors als Inverse oder Pseudoinverse der initialen Übertragungsmatrix in Abhängigkeit aller zu allen angesteuerten Ultraschallwandlerelementen erfassten mechanischen Verschiebungen und/oder in Abhängigkeit aller zu allen angesteuerten Ultraschallwandlerelementen erfassten elektrischen Signale der Ultraschallwandlerelemente ermittelt. Die initiale Kompensationsmatrix umfasst initiale Kompensationsparameter. Die initiale Kompensationsmatrix beziehungsweise die initialen Kompensationsparameter dienen vorteilhafterweise als Grundlage für die spätere Korrektur des Übersprechens im Betrieb des Ultraschall-Arraysensors in einem Fahrzeug. Durch die Bestimmung der initialen Kompensationsmatrix resultiert der Vorteil, dass eine genaue Kalibrierung beziehungsweise Justage des Ultraschall-Arraysensors erfolgt, wodurch die Genauigkeit der Erfassung eines reflektierten Ultraschallsignals im Betrieb verbessert wird.

Das Verfahren wird vorzugsweise für jeden hergestellten Ultraschall-Arraysensor durchgeführt. Die somit für jeden Ultraschall-Arraysensor spezifisch ermittelte Kompensationsmatrix wird vorteilhafterweise auf einem Speicherelement des Ultraschall-Arraysensors und/oder einer Rechenvorrichtung des Fahrzeugs gespeichert.

In einer bevorzugten Ausgestaltung der Erfindung ist die erzeugte mechanische Schwingung des jeweiligen Ultraschallwandlerelements mittels eines jeweils zugeordneten Membranbereiches des Ultraschall-Arraysensors dazu eingerichtet, ein Ultraschallsignal in die Umgebung auszusenden. Dazu umfasst der Ultraschall-Arraysensor vorteilhafterweise ein Gehäuseteil, insbesondere einen Membrantopf, welcher eine Membran aufweist, wobei jeder der Ultraschallwandlerelemente des Ultraschall-Arraysensors einem unterschiedlichen Membranbereich beziehungsweise einem unterschiedlichen Teilbereich der Membran zugeordnet beziehungsweise mit dem unterschiedlichen Membranbereich beziehungsweise dem unterschiedlichen Teilbereich der Membran mechanisch beziehungsweise stoff- und/oder kraftschlüssig verbunden beziehungsweise an diese fixiert ist, beispielsweise durch Verklebung. Mit anderen Worten ist beispielsweise eine Elektrode, insbesondere die Masseelektrode, des jeweiligen Ultraschallwandlerelementes mit der dem jeweiligen zugeordneten Membranbereich verklebt. Alternativ kann es vorgesehen sein, dass der Gehäuseteil, insbesondere der Membrantopf, des Ultraschall-Arraysensors für jedes Ultraschallwandlerelement eine separate Membran aufweist.

Vorteilhafterweise ist das Übersprechtestanregungssignal dazu eingerichtet, das sendende Ultraschallwandlerelement zur Erzeugung wenigstens eines Ultraschallsignales anzusteuern, wobei das Ultraschallsignal insbesondere zumindest einen Impuls, einen Burst beziehungsweise ein zeitlich begrenztes monofrequentes, harmonisches Signal und/oder ein Chirp-Signal beziehungsweise ein zeitlich begrenztes Signal mit veränderlicher Frequenz umfasst. Die Verwendung eines Burst-Signals und/oder eines Chirp-Signals als basierend auf dem Übersprechtestanregungssignal erzeugtes Ultraschallsignal ermöglicht vorteilhafterweise die Analyse der Übertragung beziehungsweise des Übersprechens eines monofrequenten Signals beziehungsweise eines Signals mit unterschiedlichen Frequenzen zwischen den Ultraschallwandlerelementen des Ultraschall-Arraysensors, wodurch je nach Bauform beziehungsweise Aufbau des Ultraschall-Arraysensor sowie je nach verwendeten Signalen im Betrieb das Übersprechen untersucht und die initiale Kompensationsmatrix so genau wie möglich für den Betrieb ermittelt werden kann. Beispielsweise können im Betrieb bei der Aussendung eines Ultraschallsignals und/oder beim Empfang eines reflektierten Ultraschallsignals durch eine Verwendung der initialen Kompensationsmatrix, welche nach der Aussendung eines Chirp-Signals ermittelt wird, diejenigen Frequenzen weglassen beziehungsweise ausgelassen werden, für welche der Crosstalk beziehungsweise das Übersprechen unerwünschter Schwingungen auf andere Ultraschallwandelerelemente zu hoch beziehungsweise oberhalb eines Schwellenwertes ist.

In einer Ausführung des Verfahrens wird die mechanische Verschiebung jeweils mittels eines Laserstrahls beziehungsweise mittels eines Laser-Doppler-Vibrometers erfasst.

Die optische Messung mittels Lasers bietet eine hohe Präzision und ermöglicht eine genaue Bestimmung der mechanischen Schwingungen.

Das Verfahren zur initialen Bestimmung einer Kompensation unerwünschter mechanischer Schwingungen in einem Ultraschall-Arraysensor wird vorzugsweise Endof-Line beziehungsweise als einer der letzten Schritte im Produktionsprozess des Ultraschall-Arraysensors durchgeführt.

Die Erfindung betrifft des Weiteren ein computerimplementiertes Verfahren zur Kompensation unerwünschter mechanischer Schwingungen in einem Ultraschall-Arraysensor im Betrieb eines Fahrzeugs. Der Ultraschall-Arraysensor umfasst mindestens zwei Ultraschallwandlerelemente. Im Verfahren wird ein Ultraschallsignal mittels eines oder mehrerer Ultraschallwandlerelemente des Ultraschall-Arraysensors basierend auf wenigstens einem elektrischen Messignal beziehungsweise Messanregungssignal ausgesendet, insbesondere einer Anregungsspannung. Das Messignal beziehungsweise Messanregungssignal wird optional in Abhängigkeit der initialen Kompensationsmatrix und/oder einer aktuellen Kompensationsmatrix ermittelt. Anschließend wird das an einem Objekt in der Umgebung reflektierte Ultraschallsignal mittels wenigstens einem beziehungsweise mittels eines oder mehrerer der Ultraschallwandlerelemente empfangen. Danach wird vorteilhafterweise ein Ausgabesignal basierend auf dem empfangenen, reflektierten Ultraschallsignal und zusätzlich in Abhängigkeit der initialen Kompensationsmatrix und/oder in Abhängigkeit einer aktuellen Kompensationsmatrix erzeugt. Die initiale Kompensationsmatrix wird gemäß dem erfindungsgemäßen computerimplementierten Verfahren zur initialen Bestimmung einer Kompensation unerwünschter mechanischer Schwingungen in einem Ultraschall-Arraysensor ermittelt, siehe oben stehende Beschreibung. Alternativ oder zusätzlich wird vor der Aussendung des Ultraschallsignals basierend auf dem elektrischen Messsignal beziehungsweise Messanregungssignal die aktuelle Kompensationsmatrix bestimmt, wobei in zeitlicher Abfolge nacheinander mittels jedes Ultraschallwandlerelementes eine mechanische Schwingung basierend auf wenigstens einem betrieblichen Übersprechtestanregungssignal erzeugt wird, insbesondere einer betrieblichen Übersprechtestanregungsspannung, wobei jeweils die während und/oder nach der jeweils erzeugten mechanischen Schwingung resultierenden elektrischen Signale an jedem der Ultraschallwandlerelemente erfasst werden. Mit anderen Worten resultiert jede erzeugte mechanische Schwingung durch die unerwünschten Störsignale beziehungsweise den Crosstalk mechanische Verschiebungen an allen Ultraschallwandlerelementen, welche jeweils als dazu korrelierendes elektrisches Signal für jeden Ultraschallwandler erfasst werden. Die Erzeugung der mechanischen Schwingung und die Erfassung der resultierenden elektrischen Signale an allen Ultraschallwandlerelementen wird für alle Ultraschallwandlerelemente wiederholt. Das betriebliche Übersprechtestanregungssignal entspricht insbesondere dem initialen Übersprechtestanregungssignal. Anschließend wird die aktuelle Kompensationsmatrix des Ultraschall-Arraysensors in Abhängigkeit aller erfassten elektrischen Signale als Inverse oder Pseudoinverse der aktuellen Übertragungsmatrix ermittelt. Mit anderen Worten wird die aktuelle Kompensationsmatrix des Ultraschall-Arraysensors in Abhängigkeit aller erfassten elektrischen Signale bestimmt. Die aktuelle Kompensationsmatrix umfasst aktuelle Kompensationsparameter. Die Verwendung der initialen Kompensationsmatrix ermöglicht vorteilhafterweise die Justage des Ultraschall-Arraysensors, wodurch eine hohe Präzision des ausgesendeten Ultraschallsignals sowie eine Reduktion des Übersprechens beziehungsweise des Crosstalks und insbesondere eine genauere Erfassung der empfangenen reflektierten Ultraschallsignale erzielt wird. Die Verwendung der ermittelten aktuellen Kompensationsmatrix ermöglicht vorteilhafterweise eine dynamische Anpassung an sich ändernde Bedingungen, beispielsweise wechselnde Umgebungsbedingungen, und sorgt somit für eine kontinuierlich hohe Messgenauigkeit, auch bei Alterung des Ultraschall-Arraysensors, veränderter Temperatur und/oder bei Nässe in der Umgebung des Ultraschall-Arraysensors. Es wird mit anderen Worten der Vorteil erreicht, dass mittels des Ultraschall-Arraysensors basierend auf ausgesendeten und empfangenen Ultraschallsignalen verbessert Abstände ermittelt werden können, wodurch vorteilhafterweise eine höhere Messgenauigkeit im Betrieb des Ultraschall-Arraysensors im Fahrzeug resultiert. Vorzugsweise wird das Messen von Abständen zu nahe am Fahrzeug positionierten Objekten, beispielsweise kleiner oder gleich 20 cm Abstand zum Fahrzeug, wegen eines durch das Verfahren kompensierten Nachschwingverhaltens und des entsprechenden reduzierten Übersprechens und/oder das Messen von Abständen zu weit vom Fahrzeug entfernt positionierten Objekten, beispielsweise in einem Abstand zum Fahrzeug größer oder gleich 5 m, wegen des reduzierten Übersprechens und der daraus resultierenden höheren Signalauflösung beziehungsweise wegen der höheren Messgenauigkeit erst zuverlässig ermöglicht beziehungsweise verbessert. Die Erfindung verbessert somit vorteilhafterweise die Abstands-, Winkel- und/oder Höhenerfassung mittels eines Ultraschall-Arraysensors des Fahrzeugs. Die kontinuierliche Bestimmung beziehungsweise Aktualisierung der aktuellen Kompensationsparameter im Fahrbetrieb ermöglicht eine Kompensation von unterschiedlichen, beispielsweise temperaturabhängigen Einflüssen und Alterungseffekten des Sensors, wodurch die Zuverlässigkeit des Systems erhöht wird.

In einer bevorzugten Ausgestaltung der Erfindung ist die erzeugte mechanische Schwingung des jeweiligen Ultraschallwandlerelements mittels eines jeweils zugeordneten Membranbereiches des Ultraschall-Arraysensors dazu eingerichtet, ein Ultraschallsignal in die Umgebung auszusenden. Dazu umfasst der Ultraschall-Arraysensor vorteilhafterweise ein Gehäuseteil, insbesondere einen Membrantopf, welcher eine Membran aufweist, wobei jeder der Ultraschallwandlerelemente des Ultraschall-Arraysensors einem unterschiedlichen Membranbereich beziehungsweise einem unterschiedlichen Teilbereich der Membran zugeordnet beziehungsweise mit dem unterschiedlichen Membranbereich beziehungsweise dem unterschiedlichen Teilbereich der Membran mechanisch beziehungsweise stoff- und/oder kraftschlüssig verbunden beziehungsweise an diese fixiert ist, beispielsweise durch Verklebung. Mit anderen Worten ist beispielsweise eine Elektrode, insbesondere die Masseelektrode, des jeweiligen Ultraschallwandlerelementes mit der dem jeweiligen zugeordneten Membranbereich verklebt. Alternativ kann es vorgesehen sein, dass der Gehäuseteil, insbesondere der Membrantopf, des Ultraschall-Arraysensors für jedes Ultraschallwandlerelement eine separate Membran aufweist.

In einer vorteilhaften Ausgestaltung wird die aktuelle Kompensationsmatrix zusätzlich in Abhängigkeit der initialen Übertragungsmatrix beziehungsweise der initialen Kompensationsmatrix ermittelt. Es ist vorteilhafterweise vorgesehen, die Ermittlung der aktuellen Kompensationsmatrix für jede erzeugte mechanische Schwingung mittels eines Ultraschallwandlerelementes basierend auf dem betrieblichen Übersprechtestanregungssignal durchzuführen beziehungsweise die aktuelle Kompensationsmatrix basierend auf den entsprechenden zugehörigen erfassten resultierenden elektrischen Signalen an jedem der Ultraschallwandlerelemente für eine basierend auf dem betrieblichen Übersprechtestanregungssignal erzeugte mechanische Schwingung zu aktualisieren, wobei dann in der zugrundeliegenden aktuellen Übertragungsmatrix die zum aktuellen Zeitpunkt nicht erfassten Elemente als gleich der jeweiligen Elemente der initialen Übertragungsmatrix angenommen werden. In dieser Ausgestaltung kann die Bestimmung der aktuellen Kompensationsmatrix für den Fahrer während einer Zeitspanne nebenbei, unauffällig und ohne Einschränkungen im laufenden Betrieb des Fahrzeugs erfolgen.

In einer weiteren vorteilhaften Ausführung wird die aktuelle Übertragungsmatrix beziehungsweise die aktuelle Kompensationsmatrix des Ultraschall-Arraysensors teilweise basierend auf zu wenigstens einem früheren Zeitpunkt erfassten elektrischen Signalen ermittelt. In dieser Ausgestaltung kann die Bestimmung der aktuellen Kompensationsmatrix für den Fahrer ebenfalls unauffällig und ohne Einschränkungen im laufenden Betrieb des Fahrzeugs erfolgen. Dabei basieren bevorzugt die zum früheren Zeitpunkt erfassten elektrischen Signale auf der Erzeugung mindestens einer mechanischen Schwingung mittels wenigstens eines anderen Ultraschallwandlerelementes.

Vorteilhafterweise erfolgt die Ermittlung der aktuellen Kompensationsmatrix nur für eine Geschwindigkeit eines Fahrzeugs kleiner oder gleich einem vorgegebenen Schwellenwert, insbesondere beträgt der Schwellenwert 40 Kilometer pro Stunde (km/h), 30 km/h, 25 km/h, 10 km/h oder 5 km/h.

Besonders bevorzugt wird die Ermittlung der aktuellen Kompensationsmatrix in vorgegebenen Zeitabständen durchgeführt beziehungsweise wiederholt, insbesondere sind die vorgegebenen Zeitabstände ein festes Intervall, wobei der vorgegebene Zeitabstand vorzugsweise in einem Bereich zwischen 30 Sekunden bis 24 Stunden liegt. Durch diese Ausgestaltung wird sichergestellt, dass die aktuelle Kompensationsmatrix dem aktuellen Übersprechverhalten des Ultraschall-Arraysensors beziehungsweise den aktuellen Crosstalk repräsentiert, so dass die Messgenauigkeit des Ultraschall-Arraysensors tatsächlich erhöht wird.

Vorzugsweise ist es vorgesehen, die Ermittlung der aktuellen Kompensationsmatrix in Abhängigkeit einer erfassten aktuellen Umgebungsbedingung durchzuführen, insbesondere in Abhängigkeit einer als Umgebungsbedingung erfassten Temperatur und/oder eines als Umgebungsbedingung erfassten Niederschlags. Beispielsweise, wenn die Temperatur einen unteren Temperaturschwellenwert unterschreitet und/oder einen oberen Temperaturschwellenwert überschreitet. Alternativ oder zusätzlich beispielsweise, wenn der erfasste Niederschlag einen unteren Niederschlagsniveauschwellenwert unterschreitet und/oder einen oberen Niederschlagsniveauschwellenwert überschreitet.

Die Erfindung umfasst weiterhin ein Computerprogramm mit Befehlen, die einen Computer veranlassen, die Schritte des erfindungsgemäßen computerimplementierten Verfahrens zur Kompensation unerwünschter mechanischer Schwingungen in einem Ultraschall-Arraysensor im Betrieb eines Fahrzeugs auszuführen. Die Softwareimplementierung ermöglicht eine flexible Integration in bestehende Steuergeräte und/oder ein Update eines Ultraschall-Arraysensor eines Fahrzeugs durch eine Verbindung zu einem Server beziehungsweise "over the air".

Ein weiterer Aspekt ist ein Steuergerät oder eine zentrale Recheneinheit, die so konfiguriert ist, dass sie die Schritte des erfindungsgemäßen Verfahrens zur Kompensation unerwünschter mechanischer Schwingungen in einem Ultraschall-Arraysensor im Betrieb eines Fahrzeugs ausführt. Die Integration der Funktionalität in ein Steuergerät ermöglicht eine effiziente und kostengünstige Implementierung.

Schließlich umfasst die Erfindung ein Fahrzeug, das ein solches erfindungsgemäßes Steuergerät oder eine erfindungsgemäße zentrale Recheneinheit aufweist. Die Erfindung verbessert die Abstands-, Winkel- und/oder Höhenerfassung mittels eines Ultraschall-Arraysensors des Fahrzeugs, wodurch ein Fahrerassistenzsystem des Fahrzeugs zum Parken und/oder Fahren verbessert wird. Dabei wird vorteilhafterweise die Sicherheit des Fahrzeugs und die Sicherheit von stationären und bewegten Objekten, wie Personen, in der Umgebung des Fahrzeugs sowie der Komfort im Straßenverkehr erhöht.

Weitere Vorteile ergeben sich aus der nachfolgenden Beschreibung von Ausführungsbeispielen mit Bezug zu den Figuren.

Figur 1: Ultraschall-Arraysensor im Querschnitt mit Übersprechpfaden

Figur 2: Ablaufdiagramm eines computerimplementierten Verfahrens zur initialen Bestimmung einer Kompensation unerwünschter mechanischer Schwingungen in einem Ultraschall-Arraysensor

Figur 3: Ablaufdiagramm eines computerimplementierten Verfahrens zur Reduktion unerwünschter mechanischer Schwingungen in einem Ultraschall-Arraysensor im Betrieb eines Fahrzeugs

Ausführungsbeispiele

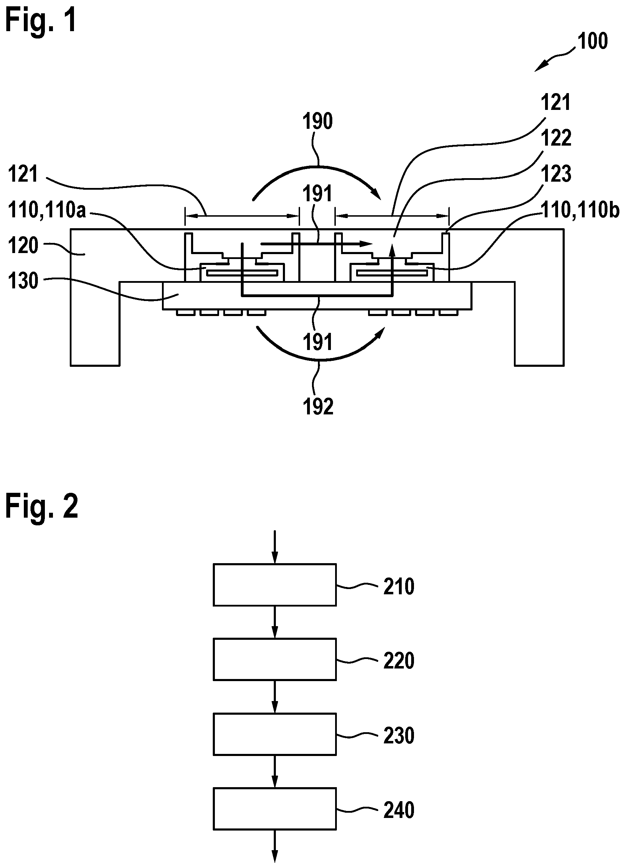

In Figur 1 ist ein Ultraschall-Arraysensor 100 im Querschnitt schematisch dargestellt. Die Übertragung von Störsignalen beziehungsweise Übersprechpfade beziehungsweise Crosstalk-Mechanismen sind in Figur 1 beispielhaft und schematisch als Pfeile skizziert. Der Ultraschall-Arraysensor 100 umfasst in diesem vorteilhaften Beispiel zwei Ultraschallwandlerelemente 110 beziehungsweise 110a und 110b, welche nebeneinander angeordnet sind, wobei beispielsweise alternativ auch drei oder vier oder mehr Ultraschallwandlerelemente 110 vorgesehen sein können, welche vorzugsweise in einem zweidimensionalen symmetrischen Feld angeordnet sind. Der Ultraschall-Arraysensor 100 weist einen Membrantopf 120 auf, welcher zwei Membranbereiche 121 umfasst. Jeder Membranbereich 121 ist dazu eingerichtet, mit einem Ultraschallwandlerelemente 110 stoff-, form- und/oder kraftschlüssig verbunden oder mechanisch kontaktiert zu sein, insbesondere wird ein Ultraschallwandlerelement 110 jeweils mit dem Membranbereich 121 beziehungsweise einer Masse 122 eines Membranbereiches 121 verklebt. Durch die mechanisch starre Kopplung beziehungsweise den Kontakt mit dem entsprechenden Membranbereich 121 ist jedes Ultraschallwandlerelement 110 dazu eingerichtet, eine mechanische Schwingung des Membranbereiches 121 zu erzeugen und/oder zu erfassen, wodurch beispielsweise ein Ultraschallsignal in die Umgebung ausgesendet und/oder empfangen beziehungsweise erfasst werden kann. Die Ultraschallwandlerelemente 110 sind räumlich sehr nah aneinander angeordnet beziehungsweise positioniert. Beispielsweise wird eine mittels des linken, ersten Ultraschallwandlerelementes 110a erzeugte mechanische Schwingung des Membranbereichs 121 als akustisches Störsignal beziehungsweise ungewünschtes Ultraschallsignal über die Luft an das rechte, zweite Ultraschallwandlerelemente 110b übertragen und erzeugt dort eine unerwünschte Schwingung des Membranbereiches 121 des zweiten Ultraschallwandlerelementes 110b. Dieses akustische Störsignal ist in Figur 1 mit dem Pfeil 190 schematisch dargestellt. Die mittels des linken, ersten Ultraschallwandlerelementes 110a erzeugte mechanische Schwingung des Membranbereichs 121 wird beispielsweise zusätzlich mechanisch durch den Membrantopf 120, insbesondere durch die Festkörpergelenke 123 der Membranbereiche 121 und die Leiterplatte 130 des Ultraschall-Arraysensors 100, als mechanisches Störsignal an das rechte, zweite Ultraschallwandlerelement 110b übertragen und erzeugt (auch dadurch) eine unerwünschte Schwingung des Membranbereiches 121 des zweiten Ultraschallwandlerelementes 110b. Dieses mechanische Störsignal ist in Figur 1 mit dem Pfeil 191 schematisch dargestellt. Zusätzlich können elektromagnetische Wechselwirkungen beziehungsweise elektrische Störsignale vorliegen, insbesondere da die elektrischen Anregungssignale zur Erzeugung der mechanischen Schwingung im Betrieb hohe Spannungsbeträge aufweisen. Dies ist in Figur 1 mit dem Pfeil 192 zwischen den elektrischen Kontakten des ersten Ultraschallwandlerelementes 110a und des zweiten Ultraschallwandlerelementes 110b schematisch dargestellt. Die Laufzeit eines empfangenen Ultraschallsignals, welches zu einem ausgesendeten Ultraschallsignal korrespondiert, repräsentiert den Abstand des Punktes in der Umgebung an dem das ausgesendete Ultraschallsignal zum Ultraschallsensor zurück reflektiert wurde, also beispielsweise den Abstand eines stationären und/oder dynamischen beziehungsweise beweglichen Objektes in der Umgebung des Fahrzeugs. Die akustischen, mechanischen und/oder elektrischen Störsignale 190, 191 und 192 beziehungsweise Übersprechpfade beziehungsweise Crosstalk-Mechanismen reduzieren die Qualität der ausgesendeten und/oder empfangenen Ultraschallsignale, wodurch die möglichen minimal und maximal erfassbaren Abstände sowie die Genauigkeit der erfassten Abstände des Ultraschall-Arraysensors 100 und/oder die Genauigkeit einer ermittelten Einfallrichtung des empfangenen reflektierten Ultraschallsignals reduziert werden.

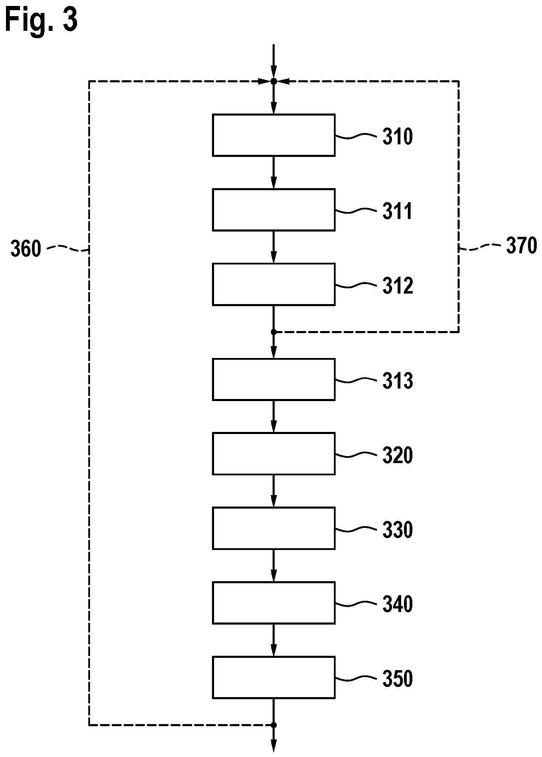

In Figur 2 ist ein Ablaufdiagramm eines computerimplementierten Verfahrens zur initialen Bestimmung einer Kompensation unerwünschter mechanischer Schwingungen in einem Ultraschall-Arraysensor schematisch als Blockdiagramm dargestellt. Das Verfahren wird insbesondere am Ende eines Produktionsprozesses zur Kalibrierung durchgeführt, um die initiale Kompensationsmatrix zu ermitteln, wodurch das Verfahren justiert beziehungsweise kalibriert wird. Der Ultraschall-Arraysensor 100 umfasst mindestens zwei Ultraschallwandlerelemente 110, siehe auch Figur 1. Das in Figur 2 dargestellte computerimplementierte Verfahren zur initialen Bestimmung einer Kompensation unerwünschter mechanischer Schwingungen in einem Ultraschall-Arraysensor umfasst die insbesondere zeitlich nacheinander erfolgende Erzeugung 210 jeweils einer mechanischen Schwingung an jedem der Ultraschallwandlerelemente 110 des Ultraschall-Arraysensors 100. Die erzeugte mechanische Schwingung wird jeweils durch Anregung beziehungsweise Anlegung eines initialen Übersprechtestanregungssignals erzeugt, beispielsweise einer initialen Übersprechtestanregungsspannung. Das initiale Übersprechtestanregungssignal wird beispielsweise von einem ASIC des Ultraschall-Arraysensors und/oder des Steuergerätes und/oder der zentralen Recheneinheit als elektrisches Signal erzeugt. Das initiale Übersprechtestanregungssignal ist vorteilhafterweise somit ein Strom- und Spannungssignal und dazu eingerichtet, das Ultraschallwandlerelement zur Erzeugung wenigstens eines Ultraschallsignales mittels des zugeordneten beziehungsweise mechanisch gekoppelten Membranbereiches 121 anzusteuern, insbesondere umfasst das Ultraschallsignal ein Impuls-Signal, ein Burst-Signal und/oder ein Chirp-Signal. Dabei wird die mechanische Schwingung in zeitlicher Abfolge für jedes der Ultraschallwandlerelemente 110 nacheinander durchgeführt. Mit anderen Worten wird in dem Verfahren gemäß Figur 2 im Schritt 210 die mechanische Schwingung der Ultraschallwandlerelemente 110 nicht gleichzeitig, sondern nacheinander erzeugt. Während und/oder nach jeder erzeugten mechanischen Schwingung eines der Ultraschallwandlerelemente 110 werden im Schritt 220 die resultierenden mechanischen Verschiebungen und/oder elektrischen Signale an jedem der Ultraschallwandlerelemente 110 erfasst. Mit anderen Worten wird im Schritt 220 der Crosstalk der erzeugten mechanischen Schwingungen auf alle Ultraschallwandlerelemente 110 erfasst. Daher repräsentiert die im Schritt 220 an einem Ultraschallwandlerelement 110, 110a, 110b erfasste mechanische Verschiebung und/oder das im Schritt 220 am Ultraschallwandlerelement 110, 110a, 110b erfasste elektrische Signal zumindest die akustischen und mechanischen Störsignale 190, 191 und/oder das elektrische Störsignal 192. Es kann in dem Schritt 220 vorgesehen sein, dass die mechanische Verschiebung eines Ultraschallwandlerelementes 110, 110a, 110b mittels eines Laserstrahls, beispielsweise mittels eines Laser-Doppler-Vibrometers, erfasst wird. Wenn in diesem Schritt 220 zusätzlich zu der Erfassung der mechanischen Verschiebung des Ultraschallwandlerelementes 110, 110a, 110b mittels des Laserstrahls das elektrische Signal am Ultraschallwandlerelementes 110, 110a, 110b erfasst wird, können die akustischen und mechanischen Störsignale 190, 191 von dem elektrischen Störsignal 192 getrennt identifiziert beziehungsweise quantifiziert beziehungsweise ermittelt werden, da der Einfluss der mechanischen Verschiebung auf das elektrische Signal bekannt ist. Anschließend erfolgt eine optionale Bestimmung 230 einer initialen Übertragungsmatrix $G_{ini}$ des Ultraschall-Arraysensors in Abhängigkeit der erfassten mechanischen Verschiebungen und/oder in Abhängigkeit der erfassten elektrischen Signale und optional in Abhängigkeit des initialen Übersprechtestanregungssignals beziehungsweise der initialen Übersprechtestanregungssignale sowie optional basierend auf der Lage der Ultraschallwandlerelemente zueinander. Die initiale Übertragungsmatrix $G_{ini}$ repräsentiert die Übertragung unerwünschter mechanischer Schwingungen beziehungsweise die akustischen, mechanischen und elektrischen Störsignale 190, 191 und 192 zwischen den Ultraschallwandlerelementen basierend auf dem initialen Übersprechtestanregungssignal beziehungsweise der erzeugten mechanischen Schwingungen. Abschließend wird im Schritt 240 eine initiale Kompensationsmatrix basierend auf der bestimmten initialen Übertragungsmatrix $G_{ini}$ ermittelt. Diese Ermittlung 240 der initialen Kompensationsmatrix des Ultraschall-Arraysensors 100 erfolgt als Inverse oder Pseudoinverse der initialen Übertragungsmatrix $G_{ini}$. Mit anderen Worten wird die initiale Kompensationsmatrix vorteilhafterweise in Abhängigkeit aller erfassten mechanischen Verschiebungen und/oder in Abhängigkeit aller erfassten elektrischen Signale der Ultraschallwandlerelemente 110, 110a, 110b ermittelt. Die initiale Kompensationsmatrix ist vorteilhafterweise dazu eingerichtet, die akustischen, mechanischen und/oder elektrischen Störsignale des Ultraschall-Arraysensors 100 für die Aussendung und/oder den Empfang von Ultraschallsignalen der jeweiligen Ultraschallwandlerelemente zur Messung von Abständen zwischen einem Fahrzeug und Objekten in der Umgebung des Fahrzeugs zu kompensieren. Details zur Bestimmung der initialen Übertragungsmatrix $G_{ini}$ und der initialen Kompensationsmatrix sind im Folgenden nach der Beschreibung der Figur 3 offenbart.

In Figur 3 ist ein Ablaufdiagramm eines computerimplementierten Verfahrens zur Kompensation unerwünschter mechanischer Schwingungen in einem Ultraschall-Arraysensor im Betrieb eines Fahrzeugs schematisch als Blockdiagramm dargestellt. Die initiale Kompensationsmatrix wird vorzugsweise gemäß dem in Figur 2 beschriebenen Verfahren ermittelt. Alternativ oder zusätzlich wird die aktuelle Kompensationsmatrix gemäß der Schritte 310 bis 313 bestimmt. Die Bestimmung der aktuellen Kompensationsmatrix wird bevorzugt in vorgegebenen Zeitabständen durchgeführt, insbesondere kontinuierlich wiederholt, siehe auch gestichelte Verbindung 360. Diese vorgegebenen Zeitabstände sind vorteilhafterweise ein festes Intervall, wobei das feste Intervall vorzugsweise in einem Bereich zwischen 30 Sekunden und drei oder 24 Stunden liegt. Es kann vorgesehen sein, dass die Ermittlung der aktuellen Kompensationsmatrix in Abhängigkeit einer erfassten aktuellen Umgebungsbedingung erfolgt, insbesondere in Abhängigkeit einer als Umgebungsbedingung erfassten Temperatur und/oder eines als Umgebungsbedingung erfassten Niederschlags. Im Schritt 310 wird in zeitlicher Abfolge nacheinander wenigstens eine mechanische Schwingung mittels jedes Ultraschallwandlerelementes 110 des Ultraschall-Arraysensors 100 basierend auf einem betrieblichen Übersprechtestanregungssignal erzeugt, wobei die wegen der zwischen den Ultraschallwandlerelementen vorliegenden mechanischen und elektrischen Störsignale 190, 191 und 192 resultierenden elektrischen Signale an allen Ultraschallwandlerelementen im Schritt 311 erfasst werden. Das betriebliche Übersprechtestanregungssignal zur Erzeugung der mechanischen Schwingungen im Schritt 310 ist vorteilhafterweise ein Strom-/Spannungssignal, welches insbesondere dazu eingerichtet ist, ein Ultraschallwandlerelement zur Erzeugung wenigstens eines Ultraschallsignales mittels einer Membran beziehungsweise eines zugeordneten Membranbereiches anzusteuern. Das Ultraschallsignal umfasst bevorzugt wenigstens ein Impuls-, Burst- und/oder Chirp-Signal. Die Erzeugung 310 der mechanischen Schwingung resultiert vorteilhafterweise in der Aussendung eines Ultraschallsignals in die Umgebung des Fahrzeugs, welches insbesondere nicht zur Ermittlung eines Abstandes zwischen dem Fahrzeug verwendet wird. Stattdessen ist die im Schritt 310 erzeugte mechanische Schwingung vorzugsweise auf die Bestimmung der aktuellen Kompensationsmatrix optimiert. Im Schritt 311 wird also das elektrische Signal jedes beziehungsweise aller Ultraschallwandlerelemente 110, 110a, 110b des Ultraschall-Arraysensors 100 während und/oder nach der im Schritt 310 erzeugten mechanischen Schwingungen erfasst, wobei das jeweilige erfasste elektrische Signal insbesondere die übertragenen unerwünschten Störsignale repräsentiert, insbesondere ein akustisches und ein mechanisches Störsignal (in Figur 1 durch die Pfeile 190 und 191 dargestellt). Im nachfolgenden optionalen Schritt 312 wird eine aktuelle Übertragungsmatrix des Ultraschall-Arraysensors 100 in Abhängigkeit der erfassten elektrischen Signale bestimmt, wobei die aktuelle Übertragungsmatrix die Übertragung unerwünschter Störsignale zwischen den Ultraschallwandlerelementen 110 in dem Ultraschall-Arraysensor 100 repräsentiert. In einem weiteren Schritt 313 wird die aktuelle Kompensationsmatrix basierend auf der bestimmten aktuellen Übertragungsmatrix und optional zusätzlich basierend auf der initialen Kompensationsmatrix ermittelt. Die aktuelle Kompensationsmatrix wird als Inverse oder Pseudoinverse der Übertragungsmatrix ermittelt, siehe dazu auch die folgenden Ausführungen nach der Beschreibung von Figur 3. Die Verfahrensschritte 310 bis 312 des Verfahrens werden also vorzugsweise für jede erzeugte mechanische Schwingung jedes Ultraschallwandlerelementes 110 des Ultraschall-Arraysensors 100 wiederholt, wobei für jede erzeugte mechanische Schwingung jeweils die elektrischen Signale aller Ultraschallwandlerelemente 110 erfasst werden, wobei anschließend jeweils die Übertragungsmatrix nach und nach bestimmt beziehungsweise gefüllt werden kann, siehe gestrichelt dargestellte Verbindung 370. In einem weiteren Schritt 320 wird ein elektrisches Anregungssignals beziehungsweise elektrisches Messsignal beziehungsweise Messanregungssignal in Abhängigkeit der initialen Kompensationsmatrix und/oder in Abhängigkeit der aktuellen Kompensationsmatrix ermittelt. Anschließend erfolgt eine Aussendung 330 eines Ultraschallsignals mittels eines oder mehrerer Ultraschallwandlerelemente 110 des Ultraschall-Arraysensors 100 basierend auf dem ermittelten elektrischen Anregungssignal beziehungsweise basierend auf dem elektrischen Messsignal beziehungsweise Messanregungssignal. Danach wird im Schritt 340 das an einem Objekt in der Umgebung reflektierte Ultraschallsignal mittels eines oder mehrerer Ultraschallwandlerelemente 110, insbesondere mittels aller Ultraschallwandlerelemente 110, empfangen. Des Weiteren wird im Schritt 350 ein auf dem empfangenen reflektierten Ultraschallsignal beziehungsweise der daraus resultierenden mechanischen Schwingung des ersten Ultraschallwandlerelementes basierendes Ausgabesignals in Abhängigkeit der initialen Kompensationsmatrix und/oder in Abhängigkeit der aktuellen Kompensationsmatrix erzeugt. Beispielsweise repräsentiert das Ausgabesignal einen Abstand und/oder eine Richtung beziehungsweise einen Richtungswinkel zu einem Reflexionspunkt bezüglich des empfangenen reflektierten Ultraschallsignals.

Der vorgestellte Ansatz kann algorithmisch gemäß dem Folgenden beispielhaft verstanden werden, vergleiche dazu auch Figur 1. In Gleichung 1 ist $s$ einen Vektor, welcher die erfassten mechanischen Verschiebungen oder das diese Verschiebungen repräsentierende erfasste elektrische Signal der Ultraschallwandlerelemente repräsentiert; $G$ ist die initiale oder aktuelle Übertragungsmatrix $G_{ini}$, $G_{akt}$, welche die Dynamik des Systems einschließlich Übersprechen beziehungsweise die Übertragung des (akustischen und mechanischen) Störsignals beschreibt; und $u$ ein Vektor der das jeweilige elektrische und/oder mechanische Anregungssignal, mit dem das jeweilige Ultraschallwandlerelement angesteuert wird, repräsentiert. Die Anzahl der Vektorkomponenten und folglich die Anzahl der Zeilen und Spalten der Übertragungsmatrix $G$ ist durch die Anzahl der einzelnen Array-Elemente beziehungsweise Ultraschallwandlerelemente 110 des Ultraschall-Arraysensors gegeben. Im Allgemeinen sind die Elemente der Vektoren $u$ und $s$ beliebige Zeitsignale. Beispielsweise sind die Elemente der Vektoren $u$ und $s$ harmonische Signale einer bestimmten Frequenz. Deren Amplituden- und Phasendarstellung erfolgt bevorzugt durch komplexe Zahlen. Daher sind beispielsweise alle Elemente der Vektoren komplexe Zahlen und die resultierenden Elemente beziehungsweise Komponenten der Übertragungsmatrix sind ebenfalls komplexe Zahlen.

$$s = G \cdot u \qquad \text{(Gleichung 1)}$$

Um das System zu charakterisieren, wird es mit einer Anzahl j verschiedener Signale angeregt, wobei $j$ insbesondere durch die Anzahl der einzeln nacheinander angesteuerten Ultraschallwandlerelemente $i$ des Ultraschall-Arraysensors gegeben ist.

Für das Beispiel eines 2x2-Ultraschall-Arraysensors, das heißt eines vier Ultraschallwandlerelemente 110 umfassenden Ultraschall-Arraysensors 100, wobei die Ultraschallwandlerelemente 110 zueinander bevorzugt quadratisch angeordnet sind, wird jedes der $j$ initialen Übersprechtestanregungssignale $u_j$ der Ultraschallwandlerelemente 110 durch jeweils einen der folgenden Vektoren $u_1$, $u_2$, $u_3$ und $u_4$ repräsentiert.

$$u_1 = \begin{pmatrix} 1 \\ 0 \\ 0 \\ 0 \end{pmatrix}; \ u_2 = \begin{pmatrix} 0 \\ 1 \\ 0 \\ 0 \end{pmatrix}; \ u_3 = \begin{pmatrix} 0 \\ 0 \\ 1 \\ 0 \end{pmatrix}; \ u_4 = \begin{pmatrix} 0 \\ 0 \\ 0 \\ 1 \end{pmatrix}$$

Beispielsweise wird am Ende des Produktionsprozesses zur Kalibrierung beziehungsweise Justage des Ultraschall-Arraysensors 100 für während und/oder nach jeder Erzeugung 210 wenigstens einer mechanischen Schwingung mittels jedes der Ultraschallwandlerelemente 110 des Ultraschall-Arraysensors 100 basierend auf dem initialen Übersprechtestanregungssignal beziehungsweise für jede Anregung $j$ = 1, 2, 3 oder 4 insbesondere mittels eines Laser-Doppler-Vibrometers eine erzeugte mechanische Verschiebungen und/oder ein dazu korrelierendes elektrischen Signals an jedem der drei Ultraschallwandlerelemente beziehungsweise Array-Elemente $i$ = 1, 2, 3 und/oder 4 desselben Ultraschall-Arraysensors 100 erfasst. Beispielsweise werden die maximalen Beträge der Amplituden der erfassten mechanische Verschiebungen beziehungsweise Vibrationen als vier Vektoren $\boldsymbol{s}_j$ mit jeweils vier Komponenten $s_{ji}$ dargestellt.

$$\boldsymbol{s}_j = \left( s_{j1};\ s_{j2};\ s_{j3};\ s_{j4} \right)$$

Analog können für jede Erzeugung 310 einer mechanischen Schwingung mittels wenigstens eines Ultraschallwandlerelementes 110 des Ultraschall-Arraysensors 100 im Betrieb basierend auf dem betrieblichen Übersprechtestanregungssignal die erfassten elektrische Signale der Ultraschallwandlerelemente 110 als Vektoren $\boldsymbol{s}_j$ mit Komponenten $s_{ji}$ dargestellt und erfasst werden, wobei im Betrieb jede Komponente $s_{ji}$ das erfasste elektrische Signal $j$ des jeweiligen Ultraschallwandlerelementes i repräsentiert.

Zur Bestimmung 230 der initialen Übertragungsmatrix $\boldsymbol{G}_{ini}$ des Ultraschall-Arraysensors 100 und zur Bestimmung 312 der aktuellen Übertragungsmatrix $\boldsymbol{G}_{akt}$ des Ultraschall-Arraysensors 100 werden Elemente $g_{ij}$ der initialen beziehungsweise aktuellen Übertragungsmatrix $\boldsymbol{G}_{ini}$, $\boldsymbol{G}_{akt}$ jeweils entsprechend der folgenden Gleichung 2 ermittelt.

$$g_{ij} = \frac{s_{ji}}{u_{jj}} \qquad\qquad \text{(Gleichung 2)}$$

Anschließend werden basierend auf der initialen beziehungsweise aktuellen Übertragungsmatrix $\boldsymbol{G}_{ini}$, $\boldsymbol{G}_{akt}$ die initialen beziehungsweise aktuellen Kompensationsparameter beziehungsweise die initiale Kompensationsmatrix ermittelt. Dafür wird die Übertragungsmatrix $\boldsymbol{G}_{ini}$, $\boldsymbol{G}_{akt}$ im einfachsten Fall invertiert. Beispielsweise repräsentieren die Elemente der invertierten initialen Übertragungsmatrix $\boldsymbol{G}_{ini}^{-1}$ die initialen Kompensationsparameter der initiale Kompensationsmatrix und die Elemente der invertierten aktuellen Übertragungsmatrix $\boldsymbol{G}_{akt}^{-1}$ die aktuellen Kompensationsparameter der aktuellen Kompensationsmatrix.

Die grundlegende Kompensation der Störsignale beziehungsweise des Übersprechens beziehungsweise der Crosstalk-Mechanismen innerhalb des Ultraschall-Arraysensors durch das computerimplementierte Verfahren zur Kompensation unerwünschter mechanischer Schwingungen in einem Ultraschall-Arraysensor im Betrieb eines Fahrzeugs erfolgt beispielsweise durch Aussendung 330 eines Ultraschallsignals mittels eines oder mehrerer Ultraschallwandlerelemente 110 basierend auf den elektrischen Anregungssignalen $\boldsymbol{u}_{comp}$, wobei der Vektor der Anregungssignale $\boldsymbol{u}_{comp}$ in Abhängigkeit der initialen Kompensationsmatrix und/oder in Abhängigkeit der ermittelten aktuellen Kompensationsmatrix gemäß folgender Gleichung 3 ermittelt beziehungsweise erzeugt wird. In Gleichung 3 repräsentiert $\boldsymbol{s}_{req}$ die gewünschte Bewegung der Ultraschallwandlerelemente, wobei die gewünschte Bewegung der Ultraschallwandlerelemente insbesondere ein Ultraschallsignal zur Abstands- und/oder Richtungsbestimmung verursacht.

$$\boldsymbol{u}_{comp} = \boldsymbol{G}^{-1} \cdot \boldsymbol{s}_{req} \qquad\qquad \text{(Gleichung 3)}$$

Analog wird, in Abhängigkeit eines in einem korrespondierenden Membranbereich des Ultraschall-Arraysensors empfangenen reflektierten Ultraschallsignals, ein elektrisches Signal $\boldsymbol{s}_{emp}$ an den Ultraschallwandlerelementen erfasst. Die erfassten elektrischen Signale repräsentieren die mechanische Bewegung der Membranbereiche der Ultraschallwandlerelemente. Anschließend wird ein Ausgabesignal $\boldsymbol{u}_m$ basierend auf dem erfassten Signal $\boldsymbol{s}_{emp}$ und in Abhängigkeit der initialen Kompensationsmatrix und/oder in Abhängigkeit der ermittelten aktuellen Kompensationsmatrix gemäß Gleichung 4 ermittelt beziehungsweise erzeugt.

$$\boldsymbol{u}_m = \boldsymbol{G}^{-1} \cdot \boldsymbol{s}_{emp} \qquad\qquad \text{(Gleichung 4)}$$

Beispielsweise wird im Falle eines Ultraschall-Arraysensors 100 mit zwei Ultraschallwandlerelementen 110, 110a, 110b mit einem der Ultraschallwandlerelemente 110, das heißt beispielsweise dem aus Figur 1 bekannten ersten Ultraschallwandlerelement 110a des Ultraschall-Arraysensors 100, im Schritt 210 eine mechanische Verschiebung $s_{1,1}$ und/oder ein elektrisches Signal $u_{1,1}$ erzeugt, welche(s) als unerwünschter Crosstalk beziehungsweise unerwünschtes (parasitäres) Übersprechen auf das andere, zweite Ultraschallwandlerelement 110b übertragen wird, siehe Gleichung 4. Durch die mittels des ersten Ultraschallwandlerelementes 110a erzeugte mechanische Verschiebung $s_{1,1}$ und/oder durch das erzeugte elektrische Signal $u_{1,1}$ resultiert also ebenfalls eine mechanische Verschiebung $s_{1,2}$ der Membran des zweiten Ultraschallwandlerelementes 110b, siehe Gleichung 5.

$$u_1 = \begin{pmatrix} u_{1,1} \\ 0 \end{pmatrix} \rightarrow \begin{pmatrix} s_{1,1} \\ s_{1,2} \end{pmatrix} \qquad \text{(Gleichung 5)}$$

In dem Schritt 220 des Verfahrens wird während und/oder nach der erzeugten mechanischen Schwingung des ersten Ultraschallwandlerelementes 110a diese mechanische Verschiebung $s_{1,2}$ und/oder ein elektrisches Signal des benachbarten zweiten Ultraschallwandlerelementes 110b und/oder optional die mechanische Verschiebung $s_{1,1}$ des gleichen, ersten Ultraschallwandlerelementes 110a erfasst. Die am zweiten Ultraschallwandlerelement 110b erfasste mechanische Verschiebung und/oder das am zweiten Ultraschallwandlerelementes 110b erfasste elektrische Signal repräsentiert zumindest die akustischen und mechanischen Störsignale 190, 191. Das erfasste elektrische Signal am zweiten Ultraschallwandlerelementes 110b kann zusätzlich auch das elektrische Störsignal 192 repräsentieren. Die Zeitdauer des Abklingverhaltens wird vorteilhafterweise durch ein Dämpfungsmaterial an der Rückseite der Membran reduziert. Es ist vorteilhafterweise vorgesehen, dass die Schritte 210 und 220 mit Ansteuerung des rechten, zweiten Ultraschallwandlerelementes 110b wiederholt werden. In dem optionalen Schritt 210 wird demnach auch mittels des zweiten Ultraschallwandlerelement 110b eine mechanische Verschiebung $s_{2,2}$ und/oder ein elektrisches Signal $u_{2,2}$ erzeugt, welches als unerwünschter Crosstalk beziehungsweise unerwünschtes (parasitäres) Übersprechen auf das andere, erste Ultraschallwandlerelement 110a übertragen wird, siehe Gleichung 6. Durch die am zweiten Ultraschallwandlerelement 110b erzeugte mechanische Schwingung $s_{2,2}$ und/oder durch das erzeugte elektrische Signal $u_{2,2}$ resultiert also ebenfalls eine mechanische Verschiebung $s_{2,1}$ der Membran des ersten Ultraschallwandlerelementes 110b, siehe Gleichung 6, und/oder ein korrespondierendes elektrisches Signal, welche erfasst werden.

$$u_2 = \begin{pmatrix} 0 \\ u_{2,2} \end{pmatrix} \rightarrow \begin{pmatrix} s_{2,1} \\ s_{2,2} \end{pmatrix} \qquad \text{(Gleichung 6)}$$

Im Schritt 230 werden gemäß Gleichung 2 im Schritt 230 die Elemente $g_{ij}$ der initialen Übertragungsmatrix $G_{\text{ini}}$ ermittelt, siehe Gleichung 7.

$$G = \begin{pmatrix} g_{1,1} & g_{2,1} \\ g_{1,2} & g_{2,2} \end{pmatrix} = \begin{pmatrix} \dfrac{s_{1,1}}{u_{1,1}} & \dfrac{s_{1,2}}{u_{2,2}} \\ \dfrac{s_{2,1}}{u_{1,1}} & \dfrac{s_{2,2}}{u_{2,2}} \end{pmatrix} \qquad \text{(Gleichung 7)}$$

Die initiale Übertragungsmatrix $G_{\text{ini}}$ repräsentiert das Schwingungsverhalten der Membranbereiche 121 beziehungsweise der zugeordneten Ultraschallwandlerelemente 110, 110a, 110b bei Anregung eines oder beider Ultraschallwandlerelemente 110, 110a, 110b durch ein elektrisches Signal. Mit anderen Worten repräsentiert die initiale Übertragungsmatrix $G_{\text{ini}}$ die Übertragung unerwünschter mechanischer Schwingungen beziehungsweise die akustischen, mechanischen und elektrischen Störsignale 190, 191 und 192 zwischen den Ultraschallwandlerelementen, bezüglich des Ultraschall-Arraysensors aus Figur 1 zwischen dem ersten Ultraschallwandlerelement und dem zweiten Ultraschallwandlerelement. Die initiale Übertragungsmatrix wird dann vorteilhafterweise im computerimplementierten Verfahren zur Kompensation unerwünschter mechanischer Schwingungen in einem Ultraschall-Arraysensor im Betrieb eines Fahrzeugs verwendet, wobei im Schritt 320 das Messsignal beziehungsweise Messanregungssignal in Abhängigkeit der initialen Kompensationsmatrix ermittelt und/oder im Schritt 350 ein auf dem empfangenen reflektierten Ultraschallsignal basierendes Ausgabesignal in Abhängigkeit der initialen Kompensationsmatrix erzeugt wird. Im Betrieb des Fahrzeugs wird vorteilhafterweise im Schritt 320 das Messsignal beziehungsweise Messanregungssignal alternativ oder zusätzlich in Abhängigkeit einer aktuellen Kompensationsmatrix ermittelt. Im Betrieb des Fahrzeugs wird vorteilhafterweise im Schritt 350 alternativ oder zusätzlich das Ausgabesignal basierend auf dem empfangenen reflektierten Ultraschallsignal und in Abhängigkeit der aktuellen Kompensationsmatrix erzeugt. Diese aktuelle Kompensationsmatrix hat die gleiche Dimension wie die initiale Kompensationsmatrix und wird während des Betriebs ermittelt. Dazu wird im Schritt 210 in zeitlicher Abfolge nacheinander eine mechanische Schwingung mittels jedes Ultraschallwandlerelementes basierend auf einem betrieblichen Übersprechtestanregungssignal erzeugt, wobei die auf den jeweils resultierenden mechanischen Schwingungen resultierenden elektrische Signale an jedem der Ultraschallwandlerelemente 110 des Ultraschall-Arraysensors 100 während und/oder nach der erzeugten mechanischen Schwingung erfasst werden. Anschließend wird im Schritt 313 die aktuelle Kompensationsmatrix des Ultraschall-Arraysensors 100 in Abhängigkeit aller erfassten elektrischen Signale als Inverse oder Pseudoinverse der aktuellen Übertragungsmatrix ermittelt.

**Patentansprüche**

1. Computerimplementiertes Verfahren zur initialen Bestimmung einer Kompensation unerwünschter mechanischer Schwingungen in einem Ultraschall-Arraysensor (100), welcher mindestens zwei Ultraschallwandlerelemente (110, 110a, 110b) aufweist, wobei

   a. in zeitlicher Abfolge nacheinander jeweils eine mechanische Schwingung an jedem der Ultraschallwandlerelemente (110) des Ultraschall-Arraysensors (100) erzeugt wird, wobei die resultierende mechanische Verschiebung und/oder das elektrische Signal an jedem der Ultraschallwandlerelemente (110, 110a, 110b) während und/oder nach der jeweiligen erzeugten mechanischen Schwingung erfasst werden; und anschließend
   b. eine initiale Kompensationsmatrix des Ultraschall-Arraysensors (100) als Inverse oder Pseudoinverse einer initialen Übertragungsmatrix (G) in Abhängigkeit aller erfassten mechanischen Verschiebungen und/oder in Abhängigkeit aller erfassten elektrischen Signale der Ultraschallwandlerelemente (110, 110a, 110b) ermittelt wird.

2. Verfahren nach Anspruch 1, wobei die erzeugte mechanische Schwingung des jeweiligen Ultraschallwandlerelements (110) mittels eines jeweils zugeordneten Membranbereiches (121) dazu eingerichtet ist, ein Ultraschallsignal in die Umgebung auszusenden.

3. Verfahren nach einem der vorhergehenden Ansprüche, wobei die mechanische Verschiebung an jedem der Ultraschallwandlerelemente (110, 110a, 100b) mittels eines Laserstrahls erfasst wird.

4. Computerimplementiertes Verfahren zur Kompensation unerwünschter mechanischer Schwingungen in einem Ultraschall-Arraysensor im Betrieb eines Fahrzeugs, welcher mindestens zwei Ultraschallwandlerelemente (110, 110a, 110b) aufweist, wobei das Verfahren folgende Schritte umfasst

   a. Aussendung (330) eines Ultraschallsignals mittels eines oder mehrerer Ultraschallwandlerelemente (110) des Ultraschall-Arraysensors (100) basierend auf wenigstens einem elektrischen Messsignal; und
   b. Empfang (340) des an einem Objekt in der Umgebung reflektierten Ultraschallsignals mittels der Ultraschallwandlerelemente (110, 110a, 110b);

   **dadurch gekennzeichnet, dass** folgende Schritte durchgeführt werden
   c. Ermittlung (320) des Messsignals und/oder Erzeugung (350) eines auf dem empfangenen reflektierten Ultraschallsignal basierenden Ausgabesignals jeweils in Abhängigkeit einer initialen Kompensationsmatrix und/oder in Abhängigkeit einer aktuellen Kompensationsmatrix, wobei

   c.1. die initiale Kompensationsmatrix gemäß einem Verfahren nach einem der Ansprüche 1 bis 3 ermittelt ist; und/oder
   c.2. die aktuelle Kompensationsmatrix gemäß folgender Schritte bestimmt wird:

   c.2.1. Erzeugung (310) einer mechanischen Schwingung in zeitlicher Abfolge nacheinander mittels jedes der Ultraschallwandlerelemente (110, 110a, 110b) basierend auf wenigstens einem betrieblichen Übersprechtestanregungssignal, wobei die resultierenden elektrischen Signale an jedem der Ultraschallwandlerelemente (110, 110a, 110b) während und/oder nach der erzeugten mechanischen Schwingung erfasst werden; wobei anschließend
   c.2.2. die aktuelle Kompensationsmatrix des Ultraschall-Arraysensors (100) in Abhängigkeit aller erfassten elektrischen Signale als Inverse oder Pseudoinverse der aktuellen Übertragungsmatrix (G) ermittelt wird.

5. Verfahren nach Anspruch 4, wobei die erzeugte mechanische Schwingung des jeweiligen Ultraschallwandlerelements (110) mittels eines jeweils zugeordneten Membranbereiches (121) dazu eingerichtet ist, ein Ultraschallsignal in die Umgebung auszusenden.

6. Verfahren nach einem der Ansprüche 4 oder 5, wobei die aktuelle Kompensationsmatrix zusätzlich in Abhängigkeit der initialen Kompensationsmatrix ermittelt wird.

7. Verfahren nach einem der Ansprüche 4 bis 6, wobei die aktuelle Übertragungsmatrix des Ultraschall-Arraysensors teilweise basierend auf zu wenigstens einem früheren Zeitpunkt erfassten elektrischen Signale ermittelt wird.

8. Verfahren nach Anspruch 7, wobei die zum früheren Zeitpunkt erfassten elektrischen Signale auf der Erzeugung mindestens einer mechanischen Schwingung mittels wenigstens eines anderen Ultraschallwandlerelementes (110, 110a, 110b) basieren.

9. Verfahren nach einem der Ansprüche 4 bis 8, wobei die Ermittlung (313) der aktuellen Kompensationsmatrix in vorgegebenen Zeitabständen durchgeführt beziehungsweise wiederholt wird, insbesondere sind die vorgegebenen Zeitabstände ein festes Intervall, wobei der vorgegebenen Zeitabstand vorzugsweise in einem Bereich zwischen 30 Sekunden bis 24 Stunden liegt.

10. Verfahren nach einem der Ansprüche 4 bis 9, wobei die Ermittlung (313) der aktuellen Kompensationsmatrix in Abhängigkeit einer erfassten aktuellen Umgebungsbedingung erfolgt, insbesondere in Abhängigkeit einer als Umgebungsbedingung erfassten Temperatur und/oder eines als Umgebungsbedingung erfassten Niederschlags.

11. Computerprogramm, umfassend Befehle, die bei der Ausführung des Programms durch einen Computer diesen veranlassen, die Schritte des Verfahrens nach einem der Ansprüche 4 bis 10 auszuführen.

12. Steuergerät oder zentrale Recheneinheit, umfassend mindestens eine Recheneinheit, die so konfiguriert ist, dass sie die Schritte des Verfahrens nach einem der Ansprüche 4 bis 10 ausführt.

13. Fahrzeug, umfassend ein Steuergerät oder eine zentrale Recheneinheit nach Anspruch 12.

# Fig. 1

# Fig. 2

# Fig. 3

**EUROPÄISCHER RECHERCHENBERICHT**

Europäisches Patentamt
European Patent Office
Office européen des brevets

Nummer der Anmeldung

EP 25 18 6893

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SHIWEI ZHOU ET AL: "An approach for reducing adjacent element crosstalk in ultrasound arrays", IEEE TRANSACTIONS ON ULTRASONICS, FERROELECTRICS, AND FREQUENCY CONTROL, IEEE, USA, Bd. 50, Nr. 12, 1. Dezember 2003 (2003-12-01), Seiten 1752-1761, XP011368594, ISSN: 0885-3010, DOI: 10.1109/TUFFC.2003.1256316 | 1-3 | INV. G01S7/52 G01S15/89 G01S15/931 |
| Y | * das ganze Dokument * ----- | 1-13 | |
| Y | DE 10 2023 200158 A1 (BOSCH GMBH ROBERT [DE]) 11. Juli 2024 (2024-07-11) * Abbildungen 1,2 * * Absatz [0037] - Absatz [0038] * * Absatz [0042] - Absatz [0047] * ----- | 1-13 | |
| A | US 2022/254980 A1 (LESSO JOHN PAUL [GB] ET AL) 11. August 2022 (2022-08-11) * Abbildungen 3,4 * * Absatz [0004] - Absatz [0005] * * Absatz [0086] * ----- | 4 | RECHERCHIERTE SACHGEBIETE (IPC) G01S |

Der vorliegende Recherchenbericht wurde für alle Patentansprüche erstellt

| Recherchenort | Abschlußdatum der Recherche | Prüfer |
|---|---|---|
| München | 15. Dezember 2025 | Heiß, Michael |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 25 18 6893

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-12-2025

| Im Recherchenbericht angeführtes Patentdokument | Datum der Veröffentlichung | Mitglied(er) der Patentfamilie | Datum der Veröffentlichung |
|---|---|---|---|
| DE 102023200158 A1 | 11-07-2024 | CN 120513403 A | 19-08-2025 |
| | | DE 102023200158 A1 | 11-07-2024 |
| | | EP 4649330 A1 | 19-11-2025 |
| | | WO 2024149643 A1 | 18-07-2024 |
| US 2022254980 A1 | 11-08-2022 | GB 2603846 A | 17-08-2022 |
| | | US 2022254980 A1 | 11-08-2022 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102022206262 A1
- DE 102015202396 A1
- DE 102021212355 A1